# EUROPÄISCHE PATENTANMELDUNG

(11) **EP 4 657 471 A1**
(43) Veröffentlichungstag der Anmeldung: **03.12.2025**
(21) Anmeldenummer: 25179888.0
(22) Anmeldetag: 30.05.2025
(51) Int. Cl.: H01F 5/02, H01F 27/30, H01F 27/32, H01F 27/33, H02K 3/52

(54) **SPULENEINRICHTUNG FÜR EINE ELEKTRISCHE MASCHINE ODER EINEN ELEKTRISCHEN WANDLER**

(30) Priorität: 31.05.2024 DE 102024115213
(71) Anmelder: Schlaeger Kunststofftechnik GmbH, 95448 Bayreuth (DE)
(72) Erfinder: Fuchs, Anton, 95448 Bayreuth (DE); Düngfelder, Peter, 95448 Bayreuth (DE)
(74) Vertreter: Hafner & Kohl PartmbB

(57) **Zusammenfassung**

Spuleneinrichtung (1) für eine elektrische Maschine (100) oder einen elektrischen Wandler, umfassend einen Eisenkern (2), insbesondere ein Lamellenpaket, um den ein elektrischer Leiter (3) zur Ausbildung einer Wicklung (4) gewickelt ist, wobei zwischen dem Eisenkern (2) und dem elektrischen Leiter (3) zumindest abschnittsweise ein Aufnahmekörper (5) angeordnet ist, der eine Aufnahmeausnehmung (6) zur zumindest abschnittsweise Aufnahme des elektrischen Leiters (3) aufweist, wobei wenigstens ein Vorspannmittel (7) das zwischen dem elektrischen Leiter (3) und dem Eisenkern (2) angeordnet oder ausgebildet ist und im Endmontagezustand der Spuleneinrichtung (1) eine Vorspannkraft (8) zwischen dem Eisenkern (2) und dem elektrischen Leiter (3) ausbildet.

## Beschreibung

Die Erfindung betrifft eine Spuleneinrichtung für eine elektrische Maschine oder einen elektrischen Wandler.

Entsprechende Spuleneinrichtungen für elektrische Maschinen oder elektrische Wandler sind aus dem Stand der Technik dem Grunde nach bekannt. Typischerweise wird ein isolierter elektrischer Leiter um einen Eisenkern, z. B. ein Lamellenpaket, unter zumindest abschnittsweiser Zwischenlage eines Aufnahmekörpers, gewickelt. Das Aufwickeln des elektrischen Leiters erfolgt unter Vorhalten einer Zugspannung in dem elektrischen Leiter, um diesen spielfrei an dem Eisenkern und dem Aufnahmekörper aufzuwickeln. Während des bestimmungsgemäßen Betriebs der Spuleneinrichtung, insbesondere aufgrund von Temperaturschwankungen und/oder aufgrund eines Alterungseffekts, kann es zu einer zumindest partiellen Weitung des elektrischen Leiters kommen. Dies kann dazu führen, dass der elektrische Leiter zumindest abschnittsweise nicht mehr in seiner ursprünglichen Position und/oder Ausrichtung oder gar unter Ausbildung eines Spiels an der Spuleneinrichtung vorliegt. Dies kann zu einem nachteiligen Verhalten der Spuleneinrichtung führen, insbesondere kann es im Betrieb der Spuleneinrichtung zu einem akustisch wahrnehmbaren Brummen kommen.

Der Erfindung liegt die Aufgabe zugrunde, eine Spuleneinrichtung für elektrische Maschinen oder einen elektrischen Wandler anzugeben, welche bzw. welcher über einen längeren Zeitraum, insbesondere über dessen Produktlebenszeit, insbesondere in Hinblick auf sein akustisches und/oder elektrisches bzw. elektromagnetisches Verhalten keine oder nur eine geringe Veränderung aufweist. Insbesondere soll eine negative Veränderung des akustischen und/oder elektrischen bzw. elektromagnetischen Verhalten der Spuleneinrichtung ausgeschlossen oder zumindest reduziert werden.

Die Aufgabe wird durch eine Spuleneinrichtung gemäß Anspruch 1 gelöst. Die hierzu abhängigen Ansprüche betreffen mögliche Ausführungsformen der Spuleneinrichtung. Ferner wird die Aufgabe durch eine elektrische Maschine gemäß Anspruch 12 oder einen elektrischen Wandler gemäß Anspruch 13 und durch ein Verfahren gemäß Anspruch 14 gelöst. Die zu Letzterem abhängigen Ansprüche betreffen mögliche Ausführungsformen des Verfahrens.

Die Erfindung betrifft eine Spuleneinrichtung für eine elektrische Maschine, z. B. eines Elektromotors und/oder eines elektrischen Generators, oder für einen elektrischen Wandler, z. B. einen Transformator und/oder einen Stromrichter, insbesondere einen Wechselstrom-Umrichter. Beispielsweise wird die elektrische Maschine als Traktionsantrieb eines zumindest temporär elektrisch antreibbaren Fahrzeugs genutzt, d. h. z. B. in einem Elektrofahrzeug oder einem Hybridfahrzeug. Die Spuleneinrichtung kann beispielsweise, insbesondere als elektrische Maschine und/oder als elektrischer Wandler, in einem als Straßenfahrzeug (z. B. Kraftfahrzeug) und/oder Schienenfahrzeug und/oder Wasserfahrzeug und/oder Luftfahrzeug ausgebildeten Elektrofahrzeug oder Hybridfahrzeug eingesetzt sein.

Die Spuleneinrichtung umfasst einen Eisenkern, insbesondere ein Lamellenpaket, z. B. Blechpaket, um den ein elektrischer Leiter zur Ausbildung einer Wicklung gewickelt ist. Ein Lamellenpaket kann aus mehreren Lamellen, z. B. Blechlamellen, gebildet sein, die aneinander gestapelt das Lamellenpaket bzw. Blechpaket bilden. Die einzelnen Lamellen können aus einem Metallblech bestehen und im zusammengesetzten bzw. gestapelten Zustand das Blechpaket bilden. Alternativ oder zusätzlich kann wenigstens eine Lamelle aus einem Nichtmetall gebildet sein. Auch kann wenigstens eine Lamelle des Lamellenpakets aus Metall gebildet sein. Zwischen dem Eisenkern und dem elektrischen Leiter ist zumindest abschnittsweise ein Aufnahmekörper angeordnet, der eine Aufnahmeausnehmung zur zumindest abschnittsweisen Aufnahme des elektrischen Leiters aufweist. Der Aufnahmekörper kann beispielsweise aus einem nicht elektrisch leitfähigen Material gebildet sein. Beispielsweise ist der Aufnahmekörper aus Kunststoff ausgebildet. Der Aufnahmekörper kann eine mechanische Leit- und/oder Führungsstruktur aufweisen zum mechanischen Leiten und/oder Führen, insbesondere Zentrieren, eines in den Aufnahmeraum, insbesondere während des Aufwickelns, angelegten elektrischen Leiter. Die Erfindung ist zeichnet sich dadurch aus, dass wenigstens ein Vorspannmittel zwischen dem elektrischen Leiter und dem Eisenkern angeordnet oder ausgebildet ist und im Endmontagezustand der Spuleneinrichtung eine Vorspannkraft zwischen dem Eisenkern und dem elektrischen Leiter ausbildet. Mit anderen Worten wirkt das Vorspannmittel derart zumindest abschnittsweise zwischen dem Eisenkern und dem elektrischen Leiter, dass eine den Eisenkern und den elektrischen Leiter voneinander wegdrückende Druckkraft ausgeübt wird. So ist es möglich, dass das Vorspannmittel eine Spann- bzw. Druckkraft ausübt, welche den elektrischen Leiter und den Eisenkern voneinander wegdrückt. Sofern es aufgrund von Temperaturschwankungen und/oder aufgrund von sonstigen Alterungseffekten über die Zeit, insbesondere während des bestimmungsgemäßen Einsatzes der Spuleneinrichtung, zu einer Veränderung der inneren Spannungen im elektrischen Leiter bzw. zu einer Lockerung der Wicklung, z. B. aufgrund dessen Längung, kommt, kann ein definiertes Halten des elektrischen Leiters durch die zwischen dem elektrischen Leiter und dem Eisenkern befindliche Vorspannkraft weiter gewährleistet werden. Hierbei kann zum Tragen kommen, dass das Längen des elektrischen Leiters bzw. dessen alterungsbedingte Veränderung in einem geringeren Maße erfolgt als das Rückfederungsverhalten des vorgespannten Vorspannmittels. Damit kann ein sich über die Zeitdauer ggf. ergebendes Spiel zwischen dem elektrischen Leiter und dem Eisenkern bzw. zwischen dem elektrischen Leiter und dem Aufnahmekörper, durch das Vorspannmittel egalisiert bzw. kompensiert werden. Folglich kann ein dauerhaft spielfreies Anordnen eines elektrischen Leiters an dem Eisenkern bzw. an dem Aufnahmekörper erreicht werden. Mit anderen Worten wird ein dauerhafter Kontakt des elektrischen Leiters an der Spuleneinrichtung bzw. eine Spaltbildung, welche über das Ausmaß am Endmontagezustand bzw. am Zustand unmittelbar nach dem Aufwickeln hinausgeht, zwischen dem elektrischen Leiter und der Spuleneinrichtung verhindert werden.

In einer optionalen Ausführungsform kann wenigstens ein Aufnahmekörper sich über zwei oder mehr Eisenkerne erstrecken. Mit anderen Worten kann eine Spuleneinrichtung mehrere Eisenkerne, beispielsweise Lamellenpakete, z. B. Blechpakete, und/oder Statorzähne ausbilden, wobei zumindest ein Aufnahmekörper sich über zumindest zwei Eisenkerne, beispielsweise Blechpakete, und/oder zumindest zwei Statorzähne erstreckt. Mit anderen Worten kann zumindest ein Aufnahmekörper an wenigstens einer Stirnseite wenigstens zwei Eisenkerne, beispielsweise Blechpakete, und/oder zwei Statorzähne angeordnet sein. Bevorzugt ist ein erster Aufnahmekörper an einer ersten Stirnseite und ein weiterer Aufnahmekörper an einer gegenüberliegenden Stirnseite von zumindest zwei Eisenkernen, beispielsweise Blechpaketen, und/oder von zumindest zwei Statorzähnen angeordnet.

Das Vorspannmittel kann auch als Kompensationsmittel bezeichnet werden, da dieses, insbesondere betriebsbedingte, Änderungen des Wicklungszustandes des elektrischen Leiters kompensieren, sodass die Wicklung bzw. der elektrische Leiter spielfrei bleibt. Die Wicklung kann beispielsweise eine Vielzahl an Windungen aufweisen, d. h. z. B., dass der elektrische Leiter mehrmals um den Eisenkern bzw. um den Eisenkern und den wenigstens einen Aufnahmekörper gewickelt wird und damit eine elektrische Spule ausbildet. Der elektrische Leiter ist beispielsweise als Draht, insbesondere als Kupferlackdraht oder versilberter Kupferdraht oder Hochfrequenzlitze, ausgebildet. Beispielsweise wird ein Kupferlackdraht als elektrischer Leiter verwendet. Die Windungen sind gegeneinander sowie gegen den Spulenkern bzw. den Eisenkern isoliert. Beispielsweise sind die Windungen aus einem Draht gebildet, welcher eine Isolierung bzw. eine Isolierschicht, z. B. Lackschicht, aufweist.

Es ist möglich, dass der Eisenkern eine längliche, insbesondere quaderförmige, Form bzw. Grundform aufweist und wenigstens ein Vorspannmittel an zumindest einer Seite, bevorzugt einer Stirnseite, des Eisenkerns angeordnet ist. In einer bevorzugten Ausführungsform berührt das Vorspannmittel unmittelbar den Eisenkern, bzw. eine ihm zugewandte Lamelle eines als Lamellenpaket ausgebildeten Eisenkerns.

Es ist möglich, dass die Vorspannkraft des Vorspannmittels in eine im Wesentlichen parallel zur Längsachse des Eisenkerns verlaufende Richtung gerichtet ist. Optional kann die Vorspannkraft des Vorspannmittels in eine exakt parallel zur Längsachse des Eisenkerns verlaufende Richtung gerichtet sein. Hierbei kann eine resultierende Vorspannkraft betrachtete werden, welche sich aus dem Zusammenwirken einzelner, z. B. in Reihe geschalteter, Vorspannelemente ergibt. Beispielsweise ist die Vorspannkraft senkrecht zu einer Stirnseite eines quaderförmigen und länglichen Eisenkerns, insbesondere Blechpakets, ausgerichtet. Die Vorspannkraft kann beispielsweise senkrecht zu einer Ausrichtebene von einzelnen Blechlamellen bzw. Blech- und/oder Plattenkörpern eines als Blechstapel ausgebildeten Eisenkerns ausgerichtet sein.

Der Aufnahmekörper kann beispielsweise einen Aufnahmeraum zur zumindest abschnittsweisen, bevorzugt überwiegenden, besonders bevorzugt vollständigen, Aufnahme eines Vorspannmittels aufweisen. Insbesondere ist der Aufnahmeraum des Aufnahmekörpers derart ausgebildet, dass ein Vorspannmittel in einem zusammengedrückten bzw. vorgespannten Zustand vollständig in den Aufnahmeraum aufnehmbar ist.

Der Aufnahmekörper umfasst einen in seiner räumlich-körperlichen Gestalt durch Wandungen bzw. Wandungsabschnitte definierten Aufnahmeraum und/oder definierende Aufnahmeausnehmung. Der Aufnahmekörper kann ein- oder mehrteilig ausgeführt sein; in einer mehrteiligen Ausführung umfasst der Aufnahmekörper mehrere Aufnahmekörpersegmente, welche unter Ausbildung des Aufnahmekörpers miteinander verbindbar bzw. verbunden sind. Unabhängig von der ein- oder mehrteiligen Ausführung umfasst der Aufnahmekörper einen Aufnahmeraum und eine Aufnahmeausnehmung; hierbei handelt es sich typischerweise jeweils um ein durch entsprechende Wandungen bzw. Wandungsabschnitte des Aufnahmekörpers begrenztes inneres Aufnahmekörpervolumen. Der Aufnahmeraum dient funktionell zumindest abschnittsweise als Aufnahmeraum zur Aufnahme des Vorspannmittels. Die Aufnahmeausnehmung dient funktionell zumindest abschnittsweise als Aufnahmeausnehmung zur Aufnahme des elektrischen Leiters.

Bevorzugt ist der Aufnahmeraum an einer ersten Seite des Aufnahmekörpers und die Aufnahmeausnehmung auf einer der ersten Seite gegenüberliegenden zweiten Seite des Aufnahmekörpers ausgebildet. Beispielsweise kann die Öffnung des Aufnahmeraums in eine zur Öffnung der Aufnahmeausnehmung entgegengesetzte Richtung weisen.

Der wenigstens eine Aufnahmekörper und/oder der Eisenkern kann beispielsweise einen Zentrier- und/oder Führungsabschnitt aufweisen, der bei Einsetzen des Vorspannmittels in den Aufnahmeraum zentrierend und/oder führend wirkt. Dabei kann während einer Zuführbewegung des Vorspannmittels in den Aufnahmeraum durch Kontakt des Zentrier- und/oder Führungsabschnitts mit dem Vorspannmittel, das Vorspannmittel in eine vordefinierte Position und/oder Ausrichtung relativ zu dem Aufnahmekörper und/oder Eisenkern geführt werden.

Optional ist es möglich, dass der wenigstens eine Aufnahmekörper und/oder der Eisenkern im zusammengesetzten Zustand einen Zuführkanal ausbildet, sodass ein außerhalb der Spuleneinrichtung befindliches Vorspannmittel über den Zuführkanal zu dem Aufnahmeraum bewegbar ist.

Eine vorteilhafte Weiterbildung sieht es vor, dass der wenigstens eine Aufnahmeraum zumindest abschnittsweise eine ringförmige Form, insbesondere eine kreisringförmige Form aufweist. Hierbei kann der Aufnahmeraum eine, insbesondere zentral platzierte, Hervorhebung aufweisen, welche z. B. zum formschlüssigen und/oder mechanisch gefangenen Halten eines in den Aufnahmeraum aufgenommenen Vorspannmittels verwendet wird.

Es ist möglich, dass die Wicklung im Zuge eines mehrmaliges Umwickelns des elektrischen Leiters um den Eisenkern und den wenigstens einen Aufnahmekörper zur Bildung einer elektrischen Spule gebildet wurde. Mit anderen Worten wird zur Bildung der Wicklung der elektrische Leiter um den Eisenkern und um den an dem Eisenkern angeordneten Aufnahmekörper gewickelt, sodass die Bildung eines aus dem elektrischen Leiterkörper gebildeten Spulenkörper durch dessen Wickeln um den Eisenkern und den Aufnahmekörper gebildet wird. Hierbei kann die Umwicklung auch um das Vorspannmittel erfolgen. Sofern das Vorspannmittel eine Baugruppe mit dem Eisenkern und dem Aufnahmekörper bildet, kann durch das Umwickeln dieser Baugruppe die Wicklung gebildet werden.

Beispielsweise kann eine Druckkraft zwischen der Wicklung und dem Eisenkern wirken, die durch eine auf den elektrischen Leiter wirkende Zugkraft bzw. durch den Wickelzug des elektrischen Leiters während des Wickelns des elektrischen Leiters um den Eisenkern erzeugt wurde bzw. erzeugbar ist. Mit anderen Worten kann eine Druckkraft zwischen der Wicklung und dem Eisenkern wirken bzw. vorherrschen, die zumindest teilweise aus einer auf den elektrischen Leiter wirkenden Zugkraft während des Umwickelns des elektrischen Leiters um den Eisenkern resultiert. Im Endfertigungszustand kann eine durch das Vorspannmittel erzeugte Vorspannkraft und eine im Zuge des Wickelprozesses in die Spuleneinrichtung eingebrachte Druckkraft (weitere Rückstellkraft) zusammenwirken, insbesondere sich gemeinsam addieren, sodass ein Lockern des elektrischen Leiters von dem Aufnahmekörper bzw. eine Spaltbildung in der aus Eisenkern, Aufnahmekörper und elektrischen Leiter gebildeten Baugruppe verhindert wird bzw. aufgrund der Vorspann- und Druckkraft kompensiert wird. Die auf den elektrischen Leiter wirkende Zugkraft legt den elektrischen Leiter, bevorzugt unter Ausbildung einer Druckkraft, an den Aufnahmekörper an. Diese auf den Aufnahmekörper wirkende Druckkraft kann das Vorspannmittel direkt in einen vorgespannten Soll-Zustand bzw. Soll-Stellung bewegen bzw. versetzten oder während eines Zurückfederns eines übervorgespannten Vorspannmittels in einer nicht gänzlich zurückbewegten und eine Vorspannkraft aufweisenden Soll-Stellung bzw. Soll-Zustand halten.

Es ist möglich, dass das Vorspannmittel kraft- und/oder form- und/oder stoffschlüssig in dem Aufnahmeraum befestigt ist. Ein Kraftschluss kann beispielsweise durch die im Endmontagezustand des Vorspannmittels vorliegende Vorspannkraft vorliegen. Ein Formschluss kann durch eine Hervorhebung des Aufnahmekörpers und/oder des Eisenkerns, insbesondere des Blechpakets, erfolgen, welche formbedingt das Vorspannmittel in seiner Bewegbarkeit relativ zu dem Eisenkern und/oder zu dem Aufnahmekörper definiert einschränkt. Eine stoffschlüssige Fixierung des Vorspannmittels kann beispielsweise durch Verkleben des Vorspannmittels erfolgen. Hierzu kann ein Klebstoff zwischen dem Vorspannmittel und dem Eisenkern und/oder zwischen dem Vorspannmittel und dem Aufnahmekörper angeordnet werden.

Es ist möglich, dass das wenigstens eine Vorspannmittel zumindest abschnittsweise, bevorzugt überwiegend, besonders bevorzugt ausschließlich, aus Metall ausgebildet ist. Alternativ oder zusätzlich kann das Vorspannmittel zumindest abschnittsweise, bevorzugt überwiegend, besonders bevorzugt ausschließlich, aus Kunststoff (z. B. Elastomer) und/oder Gummi und/oder Verbundmaterial (z. B. als Carbonfaser-Körper) ausgebildet sein.

In einer optionalen Ausführungsform kann das wenigstens eine Vorspannmittel aus wenigstens zwei Vorspannelementen bestehen. Mit anderen Worten kann wenigstens ein Vorspannmittel zumindest zweiteilig, bevorzugt dreiteilig, besonders bevorzugt vierteilig, besonders bevorzugt fünfteilig, ausgebildet sein. Beispielsweise besteht wenigstens ein Vorspannmittel aus wenigstens zwei Vorspannelementen, die als Stapel in die Aufnahmeausnehmung eingesetzt werden. Sofern wenigstens ein Vorspannmittel aus wenigstens zwei Vorspannelementen ausgebildet ist, kann es vorgesehen sein, dass das erste Vorspannelement und das zu diesem benachbart angeordnete zweite Vorspannelement kraft- und/oder form- und/oder stoffschlüssig miteinander verbunden sind. So kann im zusammengesetzten Zustand wenigstens zweier, bevorzugt im Zustand von wenigstens drei, gestapelter Vorspannelemente, benachbarte Vorspannelemente formschlüssig miteinander verbunden sein. Beispielsweise ist eine Ausrichtebene bzw. eine Haupterstreckungsebene der wenigstens zwei Vorspannelemente des Vorspannmittels parallel zu der Ausrichtebene bzw. Stapelebene der als Blechpaket gestapelten Blechkörper des Eisenkerns ausgerichtet.

Das zumindest eine Vorspannmittel kann vorzugsweise wenigstens eine Tellerfeder umfassen. Bevorzugt wird das Vorspannmittel aus wenigstens zwei Tellerfedern gebildet. Die Tellerfeder kann eine Form eines Mantels eines flachen Kegelstumpfs aufweisen. Sofern das zumindest eine Vorspannmittel aus zwei oder mehr Vorspannelementen ausgebildet ist, können die Vorspannelemente jeweils als Tellerfeder ausgebildet sein. Beispielsweise können die Tellerfedern gestapelt werden. Durch deren zumindest teilweise, bevorzugt überwiegend, besonders bevorzugt vollständig, wechselsinnige oder gleichsinniges Aufeinanderschichten, kann gezielt die Federwirkung bzw. die im Endmontagezustand wirkende Vorspannkraft vorgegeben bzw. eingestellt werden. Allgemein kann das Vorspannmittel als Zug- und/oder Druckfeder ausgebildet sein. Im Falle einer Zugfeder kann das Vorspannmittel mit einer Mechanik wirkverbunden sein, welche eingerichtet ist, die Zugkraft der Zugfeder in eine Druckkraft zu überführen, welche als eine Druckkraft ausführende Vorspannkraft zwischen dem Eisenkern und dem elektrischen Leiter wirkt. Alternativ oder zusätzlich kann das wenigstens einen Vorspannmittels, z. B. wenigstens ein Vorspannelement des Vorspannmittels, als Biegefeder ausgebildet sein. Beispielsweise ist das wenigstens eine Vorspannmittel als Blattfeder, bevorzugt als Elliptikfeder, ausgebildet oder umfasst eine solche. Optional kann das wenigstens eine Vorspannmittel eine Torsionsfeder umfassen, insbesondere mit einem runden oder quadratischen oder rechteckigen Querschnitt. Beispielsweise ist das wenigstens eine Vorspannmittel als Schraubenfeder ausgebildet, insbesondere als Druckfeder und/oder Kegelfeder und/oder Zugfeder. Beispielsweise weist ein als Druckfeder ausgebildetes Vorspannmittel zumindest eine abgebogene oder abgeschnittene Endwindung auf. Allgemein kann das Vorspannmittel ein zu dem Eisenkern und dem Aufnahmekörper separates Bauteil bilden.

Das, insbesondere als Tellerfeder ausgebildete, Vorspannmittel kann beispielsweise eine Federkraft von mindestens 500 N, bevorzugt mindestens 1000 N, besonders bevorzugt mindestens 1500 N, höchst bevorzugt mindestens 2000 N, weiter bevorzugt mindestens 2500 N, aufweisen. Alternativ oder zusätzlich kann das, insbesondere als Tellerfeder ausgebildete, Vorspannmittel beispielsweise eine Federkraft von maximal 12000 N, bevorzugt 8000 N, besonders bevorzugt 6000 n, weiter bevorzugt 5000 N, höchst bevorzugt 4000 N, aufweisen. Bevorzugt erfolgt eine Dimensionierung bzw. eine Federauslegung des wenigstens einen Vorspannmittels derart, dass dieses von den Abmessungen und Prozessparamatern der Verarbeitung der Spuleneinrichtung abhängig ist und/oder dass vermittels des Vorspannmittels eine Kompensation bzw. ein Schadlosstellen von Alterungsbedingungen der Spuleneinrichtung, welche durch Validierungstests und/oder Umlage tatsächlicher Belastung ermittelt werden, erfolgen kann. Die Zielsetzung der Anordnung und/oder Auslegung Vorspannmittel ist es, ein akustisches Brummen bzw. ein gutes NVH-Verhalten (Noise, Vibration Harshness - NHV) der Spuleneinrichtung zu erreichen.

Das, insbesondere als Tellerfeder ausgebildete, Vorspannmittel kann zwischen seinem entspannten bzw. von äußeren Kräften freien Vormontagezustand in seinen komprimierten Soll-Zustand einen Hub von 0,05 bis 1,0 mm, bevorzugt 0,10 bis 0,75 mm, besonders bevorzugt 0,15 bis 0,60 mm, weiter bevorzugt 0,2 bis 0,5 mm, höchst bevorzugt 0,22 bis 0,40 mm, ausführen bzw. ausgeführt haben.

Die aus dem Vorspannmittel sich ergebende Vorspannkraft kann auf ggf. eine Vorspannkraft, welche sich aus einem vor oder während des Wickelprozesses komprimierten Blechpaket (Eisenkern) ergibt, abgestimmt sein, beispielsweise nach Art einer mechanischen Reihenschaltung. Beispielsweise kann die Vorspannkraft des zumindest einen Vorspannmittels größer sein als die Vorspannkraft, welche sich aus einem, vor oder während des Wickelprozesses komprimierten Blechpaket (Eisenkern) ergibt. Somit kann z. B. die Vorspannkraft des Blechpaktes während der Lebenszeit der Spuleneinrichtung abnehmen, wobei dadurch, dass die Vorspannkraft des Vorspannmittels größer ist bzw. für diesen Fall ausgelegt wurde, diese Abnahme kompensierbar ist. Mit anderen Worten kann die mechanische Reihenschaltung von federnden Elementen (z. B. Blechpaket und Vorspannmittel) derart ausgelegt sein, dass bei Alterung der Spuleneinrichtung, die Vorspannung des Vorspannmittels zu einem Mindestbetrag erhalten bleibt, sodass sich keine, insbesondere akustisch nachteiligen, Effekte an der Spuleneinrichtung ergeben können.

Optional ist es möglich, dass wenigstens ein Vorspannmittel zwischen den Blechlamellen eines als Blechpaket ausgebildeten Eisenkerns angeordnet oder ausgebildet ist. Beispielsweise kann hierzu zwischen wenigstens zwei Blechlamellen ein Gummi oder ein anderes Elastisches Material angeordnet sein.

Es ist möglich, dass das wenigstens eine Vorspannmittel den Eisenkern zumindest abschnittsweise unmittelbar berührt. Alternativ oder zusätzlich kann zwischen dem Vorspannmittel und dem elektrischen Leiter wenigstens ein Abschnitt des Aufnahmekörpers angeordnet sein. Bevorzugt wird der elektrischen Leiter nicht von dem Vorspannmittel berührt bzw. eine Vorspannkraft des Vorspannmittels wirkt ausschließlich mittelbar über den wenigstens einen Aufnahmekörper auf den elektrischen Leiter.

Neben der Spuleneinrichtung betrifft die Erfindung auch eine elektrische Maschine, die aus wenigstens zwei Spuleneinrichtungen, insbesondere aus wenigstens zwei hierin beschriebene Spuleneinrichtungen, besteht, die im zusammengesetzten Zustand einen ringförmigen, insbesondere kreisringförmigen, Stator bilden. Der Stator kann durch die aneinandergesetzten Spuleneinrichtungen einen Zylinder, insbesondere einen Kreiszylinder, bilden.

Ferner betrifft die Erfindung ein Verfahren zum Herstellen einer Spuleneinrichtung, insbesondere einer hierin beschriebenen Spuleneinrichtung. Das Verfahren umfasst ein Bereitstellen eines Eisenkerns, insbesondere eines Blechpakets, sowie eines Aufnahmekörpers, wobei der Aufnahmekörper eine Aufnahmeausnehmung zur zumindest abschnittsweisen Aufnahme eines elektrischen Leiters aufweist. Ferner erfolgt ein Anordnen eines Vorspannmittels an den Eisenkern und/oder den Aufnahmekörper. In einem weiteren Verfahrensschritt erfolgt ein Umwickeln des Eisenkerns und Aufnahmekörpers mit einem elektrischen Leiter. Das Vorspannmittel wird verfahrensgemäß derart zwischen dem Eisenkern und dem elektrischen Leiter angeordnet oder ausgebildet, dass im Endmontagezustand der Spuleneinrichtung eine Vorspannkraft zwischen dem Eisenkern und dem elektrischen Leiter wirkt. Das Vorspannmittel kann beispielsweise eine Blechlamelle des als Blechpaket ausgebildeten Eisenkerns bilden. Im bestimmungsgemäßen Betrieb der Spuleneinrichtung kann es zu einer Veränderung, insbesondere einer Abnahme, von inneren mechanischen Spannung des elektrischen Leiters bzw. von Haltekräften des elektrischen Leiters, z. B. aufgrund von thermischen Schwankungen und/oder aufgrund von Alterung über den zeitlichen Verlauf kommen. Auch der Aufnahmekörper kann Alterungseffekten unterworfen sein, welche dazu führen, dass sich die Fixierung des aufgewickelten elektrischen Leiters verändert. Vermittels der vorspannmittelseitigen Vorspannkraft kann eine Abnahme von Haltekräften des elektrischen Leiters an dem Eisenkern bzw. an dem Aufnahmekörper entgegengewirkt werden.

In einer vorteilhaften Weiterbildung des Verfahrens kann es vorgesehen sein, dass das Vorspannmittel nach dem Umwickeln des Eisenkerns und des Aufnahmekörpers angeordnet wird. Hierzu kann ein Zuführkanal 19 an, d. h. in oder auf, dem Eisenkern und/oder an, d. h. in oder auf, dem wenigstens einen Aufnahmekörper angeordnet oder ausgebildet sein, sodass nach Umwickeln des Eisenkerns mit dem elektrischen Leiter ein Einbringen, insbesondere ein vollständiges Eintauchen bzw. Aufnehmen, des Vorspannmittels in den Aufnahmeraum erfolgen kann. Es ist möglich, dass während des Einbringens des Vorspannmittels dieses eine Vorspannung zum Erreichen einer im Endmontagezustands vorherrschenden Vorspannkraft erfährt. Hierzu kann der Eisenkern und/oder der wenigstens eine Aufnahmekörper eine Gleitschräge aufweisen, sodass eine auf das einzubringende Vorspannmittel aufgebrachte Einsetzkraft, insbesondere Druckkraft, eine Vorspannarbeit ausführt, zur Ausbildung der im Endmontagezustand vorherrschenden und zwischen dem Eisenkern und dem elektrischen Leiter wirkenden Vorspannkraft.

Alternativ kann das Vorspannmittel vor oder während dem Umwickeln des Eisenkerns und des Aufnahmekörpers angeordnet werden, d. h., dass vor einem Start des Wickelvorgangs zum Umwickeln des Eisenkerns und insbesondere des Aufnahmekörpers mit dem elektrischen Leiter, das wenigstens eine Vorspannmittel bereits zumindest abschnittsweise in dem Aufnahmeraum des Aufnahmekörpers verortet ist. Beispielsweise erfolgt keine Bewegung in eine Endposition oder eine Teilbewegung in eine Endposition des Vorspannmittels, nachdem der Wickelvorgang des elektrischen Leiters gestartet oder abgeschlossen wurde.

Es kann sich als vorteilhaft erweisen, wenn das wenigstens eine Vorspannmittel während des Umwickelns des Eisenkerns und des Aufnahmekörpers durch ein Rückhaltemittel in eine Rückhaltestellung zurückgehalten und/oder mit einer Rückhaltekraft beaufschlagt wird. Mit anderen Worten wird eine Vorspannkraft des Vorspannmittels durch das Rückhaltemittel zurückgehalten bzw. derart durch eine gegenhaltende Rückhaltekraft kompensiert, sodass in einem von der Vorspannkraft in einem geringeren Maße beeinflussten Zustand oder in einem von der Vorspannkraft nicht beeinflussten Zustand der von Eisenkern und Aufnahmekörper das zumindest abschnittsweise, bevorzugt überwiegende, besonders bevorzugt vollständige, Umwickeln bzw. Aufwickeln des elektrischen Leiter erfolgen kann. Bevorzugt wird eine Rückhaltekraft aufgebracht die größer ist als die Vorspannkraft. Durch das nach dem Umwickeln erfolgende Lösen der Rückhaltekraft des Rückhaltemittels bzw. durch das Außerkontaktbringen des Rückhaltemittels kann die Vorspannkraft zwischen dem Eisenkern und dem Aufnahmekörper wirken und im Falle der Alterung bzw. Längung des elektrischen Leiters eine Spaltbildung bzw. das Entstehen eines Spiels verhindern.

Sämtliche Vorteile, Einzelheiten, Ausführungen und/oder Merkmale der erfindungsgemäßen Spuleneinrichtung sind auf die erfindungsgemäße elektrische Maschine und auf das erfindungsgemäße Verfahren übertragbar bzw. anzuwenden und umgekehrt.

Die Erfindung ist anhand von Ausführungsbeispielen in den Zeichnungen näher erläutert. Dabei zeigt:
Fig. 1 eine perspektivische Prinzipdarstellung einer Spuleneinrichtung gemäß einem ersten Ausführungsbeispiel;
Fig. 2 eine schematische Unteransicht auf eine Spuleneinrichtung gemäß Figur 1;
Fig. 3 eine schematische Vollschnittdarstellung einer Spuleneinrichtung eines ersten Ausführungsbeispiels gemäß Schnittlinie A-A aus Figur 2;
Fig. 4 eine schematische Vollschnittdarstellung einer Spuleneinrichtung eines zweiten Ausführungsbeispiels gemäß Schnittlinie A-A aus Figur 2;
Fig. 5 eine schematische Vollschnittdarstellung einer Spuleneinrichtung eines dritten Ausführungsbeispiels gemäß Schnittlinie A-A aus Figur 2;

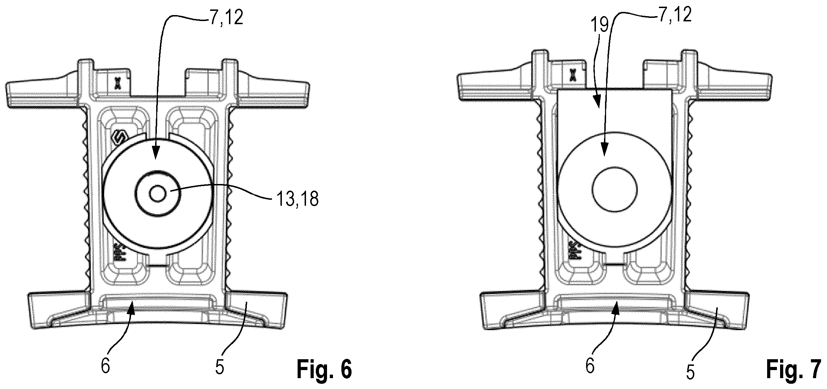

Fig. 6 eine schematische Seitenansicht auf einen Aufnahmekörper gemäß einem Ausführungsbeispiel;
Fig. 7 eine schematische Seitenansicht auf einen Aufnahmekörper gemäß einem weiteren Ausführungsbeispiel;
Fig. 8 eine perspektivische Schnittdarstellung eines Endabschnitts einer Spuleneinrichtung gemäß einem Ausführungsbeispiel;
Fig. 9 eine Prinzipdarstellung einer Spuleneinrichtung gemäß einem weiteren Ausführungsbespiel;
Fig. 10 eine Prinzipdarstellung einer Spuleneinrichtung gemäß Figur 8.

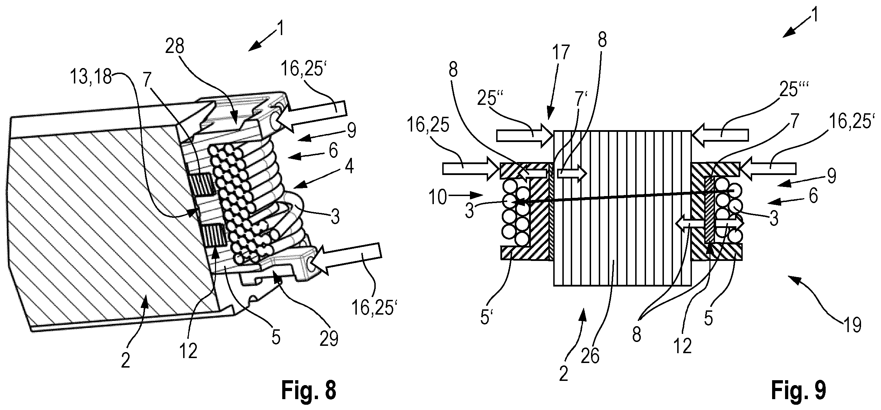

Die Figuren zeigen eine Spuleneinrichtung 1 für eine elektrische Maschine 100 oder einen elektrischen Wandler (nicht dargestellt), umfassend einen Eisenkern 2. Der Eisenkern 2 kann als Blechpaket ausgebildet sein, d. h., dass eine Vielzahl an metallischer bzw. aus einem Metall bestehender flächiger Körper in gestapelter Form, z. B. als gestapelte Blechlamellen 26, vorliegen, vgl. Figur 9. Um den Eisenkern 2 ist ein, insbesondere drahtartiger oder drahtförmiger elektrischer Leiter 3 zur Ausbildung einer Wicklung 4 gewickelt. Zwischen dem Eisenkern 2 und dem elektrischen Leiter 3 ist zumindest abschnittsweise ein Aufnahmekörper 5 angeordnet. Mit anderen Worten wird der Aufnahmekörper 5, z. B. ein elektrischer Isolierkörper, insbesondere ausschließlich, über die Wicklung 4 an dem Eisenkern 2 befestigt. Der Aufnahmekörper 5 weist eine Aufnahmeausnehmung 6 zur zumindest abschnittsweisen Aufnahme des elektrischen Leiters 3 auf. Die Aufnahmeausnehmung 6 kann als Hohlraum ausgebildet sein, in welchen der elektrische Leiter 3 zumindest abschnittsweise eingewickelt wird.

Die Wicklung 4 wird im Zuge eines mehrmaligen Umwickelns des elektrischen Leiters 3 um den Eisenkern 2 und um den wenigstens einen Aufnahmekörper 5 zur Bildung einer elektrischen Spule gebildet. Hierzu wird der elektrische Leiter 3 um den Eisenkern 2 und um den an dem Eisenkern 2 angeordneten Aufnahmekörper 5 bewegt bzw. umwickelt. Während des Umwickelns wird ein in seiner Grundform geradliniger elektrischer Leiter 3 zur Ausbildung einer Spirale gebogen.

Es ist möglich, dass eine Druckkraft zwischen der Wicklung 4 und dem Eisenkern 2 wirkt, die durch eine auf den elektrischen Leiter 3 wirkende Zugkraft während des mehrmaligen Umwickelns des elektrischen Leiters 3 um den Eisenkern 2 erzeugt wurde bzw. erzeugbar ist oder resultiert. Die, aus der auf den elektrischen Leiter 3 wirkenden Zugkraft, resultierende Druckkraft kann zur Ausbildung einer kraftschlüssigen Verbindungskomponente zum Verbinden bzw. zum Befestigen des Aufnahmekörpers 5 an dem Eisenkern 2 verwendet werden.

Es ist vorgesehen, dass wenigstens ein Vorspannmittel 7 zwischen dem elektrischen Leiter 3 und dem Eisenkern 2 angeordnet oder ausgebildet ist. Dies erfolgt derart, dass im Endmontagezustand der Spuleneinrichtung 1 eine Vorspannkraft 8 zwischen dem Eisenkern 2 und dem elektrischen Leiter 3 ausbildet wird bzw. vorherrscht.

Das Vorspannmittel 7 kann beispielsweise materialeinheitlicher bzw. integraler Bestandteil des Aufnahmekörpers 5 und/oder des Eisenkerns 2 sein. So kann das Vorspannmittel 7 zumindest abschnittsweise, bevorzugt überwiegend, besonders bevorzugt vollständig, einen einstückigen Bestandteil des Aufnahmekörpers 5 und/oder des Eisenkerns 2 bilden. Beispielsweise kann eine, insbesondere eine äußere, Lamelle, insbesondere Blechlamelle 26, des Blechpakets einen aus einer Haupterstreckungsebene der Lamellen heraus ragenden Abschnitt, welcher einen Vorspannbereich bildet, aufweisen. Beispielsweise kann ein Abschnitt zumindest einer Lamelle aus der Haupterstreckungsebene der Lamelle herausgebogen sein und einen Vorspannbereich, welcher das Vorspannmittel bildet, ausbilden.

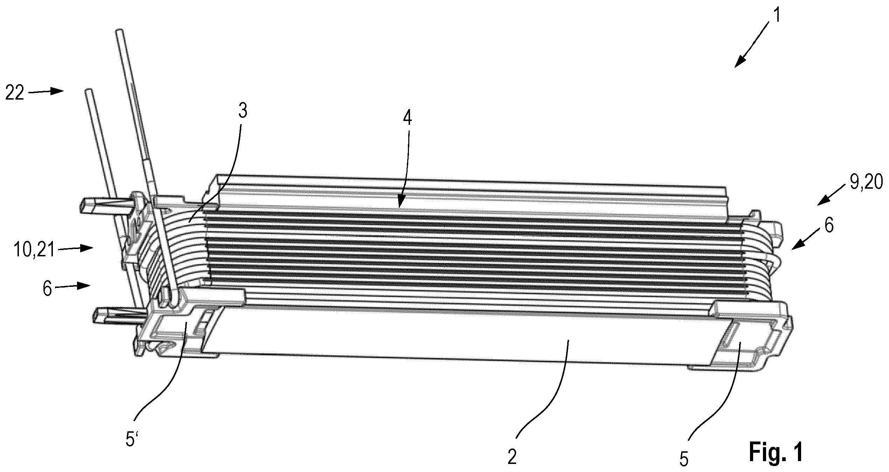

Der Eisenkern 2 kann eine längliche, insbesondere quaderförmige, bzw. eine längliche prismatische Form aufweisen, wobei wenigstens ein Vorspannmittel 7 an zumindest einer Seite 9, 10, bevorzugt einer Stirnseite 9, 10, des Eisenkerns 2 angeordnet ist. Sofern die Spuleneinrichtung 1 ein einziges Vorspannmittel 7 aufweist, kann das einzige Vorspannmittel 7 ausschließlich an einer Stirnseite 9, 10 angeordnet oder ausgebildet sein. In Figur 1 ist eine längliche Spuleneinrichtung 1 gezeigt, diese weist an deren Stirnseiten 9, 10 (kurzen Seiten) jeweils einen Aufnahmekörper 5, 5' auf. Ein erster Aufnahmekörper 5 ist auf der Gegenschaltseite 20 und ein weiterer Aufnahmekörper 5' auf der Schaltseite 21 der Spuleneinrichtung 1 angeordnet. Die Schaltseite 21 bildet jene Stirnseite, an welcher die Anschlüsse 22 zum Anschließen des elektrischen Leiters 3 mit einem benachbarten elektrischen Bauteil, insbesondere mit wenigstens einem Anschluss einer weiteren Spuleneinrichtung 1, angeordnet sind.

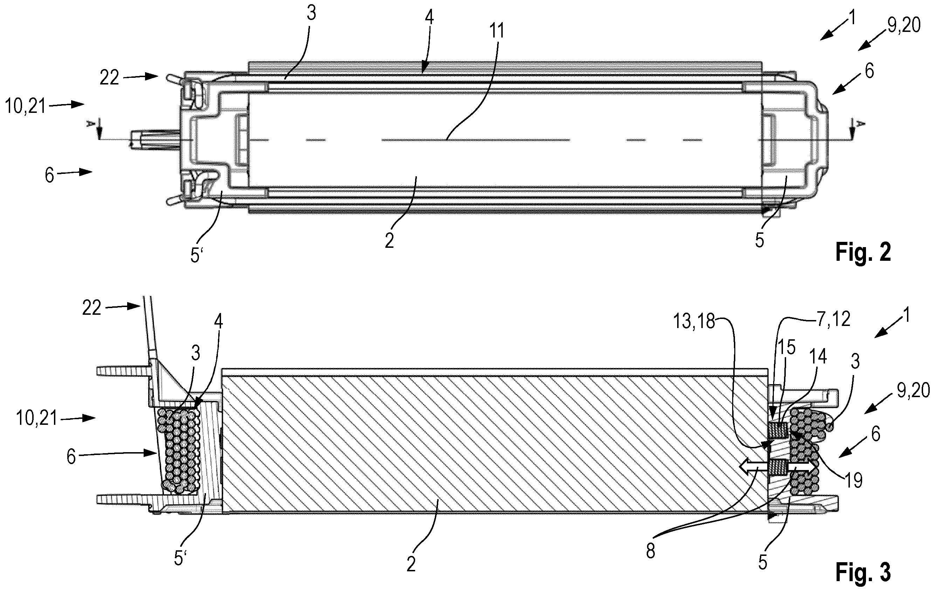

In der in Figur 3 gezeigten Ausführungsform ist das Vorspannmittel 7 ausschließlich auf einer Stirnseite 9 angeordnet (auf der Gegenschaltseite 20). In dem Aufnahmekörper 5' auf der Schaltseite 21 ist kein Vorspannmittel 7 angeordnet oder ausgebildet.

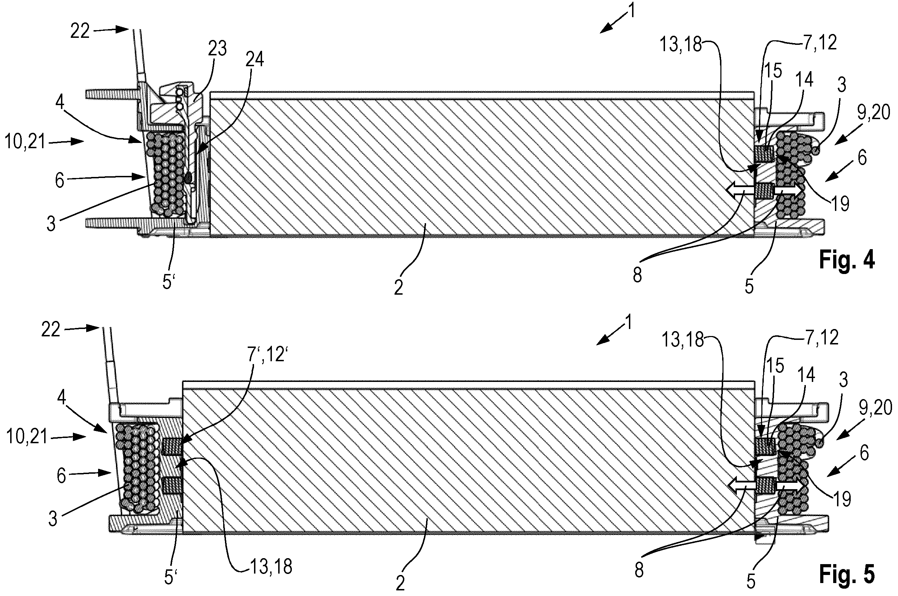

In der in Figur 4 gezeigten Ausführungsform ist an dem Aufnahmekörper 5 auf der ersten Stirnseite 9 (Gegenschaltseite 20) ein Vorspannmittel 7 und an dem weiteren Aufnahmekörper 5', welcher auf der zweiten Stirnseite 10 angeordnet ist, ein Funktionselement angeordnet. Das Funktionselement kann beispielsweise ein Sensor 23, insbesondere ein Temperatursensor (z. B. NTC-Sensor), sein. Das Funktionselement kann vor oder während oder nach dem Umwickeln des Eisenkerns 2 und des Aufnahmekörpers 5, 5' mit dem elektrischen Leiter 3 an, d. h. z. B. in oder auf, die Spuleneinrichtung 1 angeordnet werden. Bevorzugt weist wenigstens ein Aufnahmekörper 5, 5' eine Aufnahme 24 zur Aufnahme eines Funktionselements, insbesondere eines Sensors 23, auf. Das Funktionselement, insbesondere der Sensor 23, kann beispielsweise an einem Aufnahmekörper 5, 5' angeordnet sein, an welchem wenigstens ein Vorspannmittel 7 oder an welchem kein Vorspannmittel 7 angeordnet oder ausgebildet ist. Das Funktionselement, insbesondere der Sensor 23, kann beispielsweise kraft- und/oder form- und/oder stoffschlüssig an dem Aufnahmekörper 5, 5', insbesondere in der Aufnahme 24 des Aufnahmekörpers angeordnet sein, insbesondere ist das Funktionselement, insbesondere der Sensor 23 angeclipst. Ein Anclipsen kann dabei umfassen, dass durch Krafteinwirkung einmalig ein Einrasten möglich ist, das einen Rastwiderstand bereitstellt, der sich, zumindest selbsttätig, nicht wieder in den Grundzustand zurückstellt. Mit anderen Worten bilden die wenigstens zwei Strukturbereiche der Clipsverbindung einen Rastmechanismus aus, sodass bei Krafteinwirkung, eine Deformierung des Deformationsbereichs bewirkt wird, die wenigstens zwei Strukturbereiche miteinander formschlüssig in Eingriff bringt, beispielsweise nach Art einer Rast-, Schnapp- oder Clipverbindung.

Gemäß der in Figur 5 gezeigten Ausführungsform kann es vorgesehen sein, dass an zwei gegenüberliegenden Seiten, insbesondere Stirnseiten 9, 10, der Spuleneinrichtung 1 und/oder des Eisenkerns 2 jeweils ein Vorspannmittel 7, 7' angeordnet oder ausgebildet ist. Beispielsweise steht ein erstes Vorspannmittel 7 mit einer ersten Stirnseite 9 des Eisenkerns 2 und ein weiteres Vorspannmittel 7' mit einer weiteren Stirnseite 10 des Eisenkerns 2 in Kontakt, vgl. Figur 5

Optional kann die Vorspannkraft 8 des wenigstens einen Vorspannmittels 7 in eine im Wesentlichen parallel zur Längsachse 11 des Eisenkerns 2 verlaufende Richtung gerichtet sein. Der Aufnahmekörper 5 kann zumindest einen Aufnahmeraum 12 zur zumindest abschnittsweisen, bevorzugt überwiegenden, besonders bevorzugt vollständigen, Aufnahme wenigstens eines Vorspannmittels 7 aufweisen.

Der Aufnahmekörper 5 und/oder der Eisenkern 2 kann beispielsweise einen Zentrier- und/oder Führungsabschnitt 13 aufweisen, der bei Einsetzen des Vorspannmittels 7 in den Aufnahmeraum 12 zentrierend und/oder führend wirkt. Beispielsweise weist der Aufnahmekörper 5 und/oder der Eisenkern 2 eine Hervorhebung 18 auf, welche in einen Aufnahmebereich 20 des wenigstens einen Vorspannmittels 7 aufnehmbar ist. Der Kontakt zwischen aufnahmekörperseitiger Hervorhebung 18 und vorspannmittelseitigem Aufnahmebereich 20 kann eine zentrierende und/oder führende Funktion ausführen. Beispielsweise weist der Aufnahmeraum 12 eine ringförmige Form, insbesondere eine kreisringförmige Form aufweisen. Hierbei kann die innere Hervorhebung des ringförmig geformten Aufnahmeraums 12 die Hervorhebung 18 eines Aufnahmekörpers 5 bilden.

Optional kann das Vorspannmittel 7 zumindest abschnittsweise, bevorzugt ausschließlich, aus Metall ausgebildet sein. Alternativ oder zusätzlich kann das Vorspannmittel 7 zumindest abschnittsweise, bevorzugt ausschließlich, aus Kunststoff und/oder Gummi ausgebildet sein. Das Vorspannmittel 7 kann z. B. aus einem Elastomer ausgebildet sein.

Das Vorspannmittel 7 kann beispielsweise aus einer metallischen Feder bestehen. Das Vorspannmittel 7 kann z. B. als, insbesondere metallische, Blattfeder oder Schraubenfeder oder Tellerfeder ausgebildet sein. Alternativ kann das Vorspannmittel 7 aus einem Elastomer ausgebildet sein oder ein solches umfassen (z.B. FÜR-Oring). In einer optionalen Variante ist das Vorspannmittel 7 aus Kunststoff, z. B. PTFE, ausgebildet. Alternativ oder zusätzlich kann das Vorspannmittel 7 zumindest abschnittsweise, bevorzugt vollständig, aus einem Verbundmaterial (z.B. Carbonfaser-Körper) bestehen.

Es ist möglich, dass das Vorspannmittel 7 aus wenigstens zwei Vorspannelementen 14, 15 besteht. Bevorzugt sind wenigstens zwei Vorspannelemente 14, 15 als Stapel in die Aufnahmeausnehmung 6 eingesetzt. Das aus wenigstens zwei Vorspannelementen 14, 15 gebildete Vorspannmittel 7 kann im gestapelten Zustand in den Aufnahmeraum 12 eingebracht werden. Optional kann das zweite Vorspannelement 15 nach Anordnung des ersten Vorspannelements 14 in den Aufnahmeraum 12, in den Aufnahmeraum 12 aufgenommen werden.

Zumindest ein Vorspannmittel 7 kann beispielsweise wenigstens eine Tellerfeder umfassen, bevorzugt umfasst das zumindest eine Vorspannmittel 7 wenigstens zwei Tellerfedern. Alternativ oder zusätzlich kann zumindest ein Vorspannmittel 7 wenigstens zwei Vorspannelemente 14, 15 umfassen, wobei die beiden Vorspannelemente 14, 15 im Endmontagezustand sich gegenseitig berühren. Es ist möglich, dass eines der beiden Vorspannelemente 14, 15 mit dem Aufnahmekörper 5, 5' und/oder ausschließlich eines der beiden Vorspannelemente 14, 15 mit dem Eisenkern 2 in Kontakt steht.

Es ist möglich, dass das Vorspannmittel 7 den Eisenkern 2 zumindest abschnittsweise unmittelbar berührt. Bevorzugt ist zwischen dem Vorspannmittel 7 und dem elektrischen Leiter 3 wenigstens ein Abschnitt 19 eines Körpers, insbesondere des Aufnahmekörpers 5, angeordnet. Mit anderen Worten kann ein Kontakt von Eisenkern 2 und Vorspannmittel 7 dadurch verhindert werden, dass der Abschnitt (nicht dargestellt) des Aufnahmekörpers 5 dazwischen angeordnet ist. In einer optionalen Ausführungsform kann das Vorspannmittel 7 durch Abschnitte eines Körpers, insbesondere des Aufnahmekörpers 5, sowohl zum Eisenkern 2 als auch zum elektrischen Leiter 3 beabstandet bzw. nichtberührend angeordnet sein. Damit kann es vorgesehen sein, dass weder Eisenkern 2 noch elektrischer Leiter 3 das Vorspannmittel 7 berühren. Beispielsweise ist das Vorspannmittel 7 in einem Inneren des Aufnahmekörpers 5 platziert bzw. allseitig von dem Aufnahmekörper 5 umschlossen, derart, dass das Vorspannmittel 7 den Eisenkern 2 nicht berührt.

Erfindungsgemäß kann eine elektrische Maschine vorliegen, die wenigstens zwei Spuleneinrichtungen 1 aufweist, wobei die Spuleneinrichtungen 1 einer hierin beschriebenen Spuleneinrichtung 1 entspricht und die Spuleneinrichtungen 1 im zusammengesetzten Zustand einen ringförmigen Stator (nicht dargestellt) ausbilden. Beispielsweise können mehr als fünf, bevorzugt mehr als zehn, besonders bevorzugt mehr als zwanzig, höchst bevorzugt mehr als fünfundzwanzig Spuleneinrichtungen 1, insbesondere ringförmig, aneinandergesetzt werden, um einen ringförmigen Stator auszubilden. Hierbei können die Spuleneinrichtungen 1 an deren Längsseiten aneinandergesetzt werden. Mit anderen Worten sind in der finalen ringförmigen Ausbildung der Spuleneinrichtungen 1 die Längsachsen der einzelnen Spuleneinrichtungen 1 zueinander parallel ausgerichtet und/oder parallel zu einer Rotationsachse eines im Inneren der ringförmigen Anordnung der Spuleneinrichtungen 1 aufgenommenen Rotors. Alternativ oder zusätzlich kann ein erfindungsgemäßer elektrischer Wandler vorliegen, der wenigstens eine hierin beschriebene Spuleneinrichtung 1 umfasst.

Ferner umfasst die Erfindung ein Verfahren zum Herstellen einer Spuleneinrichtung 1, insbesondere einer hierin beschriebenen Spuleneinrichtung 1. Das Verfahren umfasst dabei den Verfahrensschritt, wonach ein Bereitstellen eines Eisenkerns 2, insbesondere eines Blechpakets, sowie eines Aufnahmekörpers 5 erfolgt, wobei der Aufnahmekörper 5 eine Aufnahmeausnehmung 6 zur zumindest abschnittsweisen Aufnahme eines elektrischen Leiters 3 aufweist. In einem weiteren Verfahrensschritt ist ein Anordnen wenigstens eines Vorspannmittels 7 an den Eisenkern 2 und/oder den Aufnahmekörper 5 vorgesehen. Ferner erfolgt ein Umwickeln des Eisenkerns 2 und Aufnahmekörpers 5 mit einem elektrischen Leiter 3, wobei das wenigstens eine Vorspannmittel 7 derart zwischen dem Eisenkern 2 und dem elektrischen Leiter 3 angeordnet oder ausgebildet ist, dass im Endmontagezustand der Spuleneinrichtung 1 eine Vorspannkraft 8 zwischen dem Eisenkern 2 und dem elektrischen Leiter 3 wirkt.

Das wenigstens eine Vorspannmittel 7 kann nach dem Umwickeln des Eisenkerns 2 und des Aufnahmekörpers 5 angeordnet werden. Optional kann das wenigstens eine Vorspannmittel 7 vor oder während dem Umwickeln des Eisenkerns 2 und des Aufnahmekörpers 5 angeordnet werden.

Das wenigstens eine Vorspannmittel 7 kann beispielsweise während des Umwickelns des Eisenkerns 2 und des Aufnahmekörpers 5 durch ein Rückhaltemittel 16 in eine Rückhaltestellung 17 zurückgehalten werden. Das Rückhaltemittel 16 kann beispielsweise ein Bestandteil einer Wickelvorrichtung (nicht dargestellt) sein und während des Umwickelns eine Rückhaltekraft 25, 25', 25", 25‴, insbesondere eine entgegen der von dem Vorspannmittel 7 erzeugten Vorspannkraft, auf die Spuleneinrichtung 1 einwirken. Das Rückhaltemittel 16 kann beispielsweise von außerhalb der Spuleneinrichtung 1 auf die Spuleneinrichtung 1 einwirken. Insbesondere kann das Rückhaltemittel 16 während der Beaufschlagung der Spuleneinrichtung 1 mit einer Rückhaltekraft 25, 25', 25", 25‴, das Vorspannmittel 7, 7' und/oder den Aufnahmekörper 5 und/oder das Blechpaket 3 mit der Rückhaltekraft 25, 25', 25", 25‴ beaufschlagen. Wie in den Figuren 3, 8, 9 und 10 beispielhaft gezeigt, kann ein erstes Paar Rückhaltekräfte 25, 25' auf das wenigstens eine Vorspannmittel 7, 7' einwirken, sodass dieses komprimiert wird. Vorzugsweise wirken auf einen Aufnahmekörper 5, 5' an wenigstens zwei Angriffspunkten jeweils eine Rückhaltekraft 25, 25' ein. Beispielsweise wird die Aufnahmeausnehmung 6 zumindest eines Aufnahmekörpers 5, 5' durch einen ersten, z. B. oberen, Begrenzungsabschnitt 28 und einen zweiten, z. B. unteren, Begrenzungsabschnitt 29 begrenzt, wobei ein erster Angriffspunkt dem ersten Begrenzungsabschnitt 28 und ein zweiter Angriffspunkt dem zweiten Begrenzungsabschnitt 29 zugeordnet, insbesondere angeordnet, sein kann. Damit wird es ermöglicht, dass ein Verkippen des Aufnahmekörpers 5, 5' während des Wickelprozesses verhindert wird. Der erste und zweite Begrenzungsabschnitt 28, 29 können an gegenüberliegenden Seiten der Wicklung 4 angeordnet sein.

Im komprimierten Zustand des wenigstens einen Vorspannmittels 7, 7' erfolgt ein Bewicklen bzw. Umwickeln des Eisenkerns 2 und des Aufnahmekörpers 5, 5' mit dem elektrischen Leiter 3. Beispielsweise nach Beendigung des Bewickelns bzw. Umwickelns können die Rückhaltekräfte 25, 25' gelöst werden, sodass aufgrund des Umwickelns im Inneren der Spuleneinrichtung 1 eine Vorspannkraft 8 des wenigstens einen Vorspannmittels 7, 7' vorliegt. Hierbei drängen die Vorspannmittel 7, 7' nach außen und werden durch die Wicklung 4 in dieser nach außen gerichteten Bewegung begrenzt oder eine derartige Bewegung wird verhindert.

Das auf der rechten Seite von Figur 9 dargestellte Vorspannmittel 7 kann durch eine die Wicklung 4 durchgreifendes Rückhaltemittel (nicht dargestellt) zurückgedrückt werden und/oder die Rückhaltekraft auf dieses Vorspannmittel 7 erfolgt durch das Aufbringen einer definierten Zugkraft (Wicklungszug) auf den elektrischen Leiter 3 während des Umwickelns.

In Figur 9 ist ein erstes Vorspannmittel 7 innerhalb eines Aufnahmeraums 12 eines ersten Aufnahmekörpers 5 angeordnet. Dabei kann das Vorspannmittel 7 den in der Aufnahmeausnehmung 6 des ersten Aufnahmekörpers 5 befindlichen elektrischen Leiter 3 berühren und insbesondere den Eisenkern 2 nicht berühren. In Figur 9 ist ein zweites Vorspannmittel 7' gezeigt, das zwischen dem Aufnahmekörper 5 und dem Eisenkern 5 angeordnet ist, wobei das zweite Vorspannmittel 7' den Eisenkern 5 berührt und insbesondere den in der Aufnahmeausnehmung 6 des zweiten Aufnahmekörpers 5' befindlichen elektrischen Leiter 3 nicht berührt. Optional ist es möglich, dass eine Spuleneinrichtung 1 wenigstens ein, insbesondere ausschließlich ein, derart angeordnetes erstes Vorspannmittel 7 oder wenigstens ein, insbesondere ausschließlich ein, derart angeordnetes zweites Vorspannmittel 7' umfasst.

Optional ist es möglich wenigstens eine weitere Rückhaltekraft 25", 25‴ vorzusehen, welche während des Umwickelns von Eisenkern 2 und Aufnahmekörper 5, 5' zumindest oder ausschließlich, den Eisenkern 2 komprimiert oder eine diesen zumindest theoretisch stauchende bzw. spannende Druckkraft auf den Eisenkern 2 einwirkt. Hierzu kann die wenigstens eine weitere Rückhaltekraft 25", 25‴ durch direkten Kontakt eines Montagehilfsmittels, z. B. einer Spanneinrichtung, mit dem Eisenkern 2 den Eisenkern 2 beaufschlagen. Sofern der Eisenkern 2 aus einem Blechpaket aus einzelnen Blechlamellen besteht, kann durch die Druckkraftbeaufschlagung vermittels der Rückhaltekräfte 25", 25‴ ein etwaiger Federeffekt des Blechpakets zumindest während des Wickelvorgangs (Umwickeln mit dem elektrischen Leiter 3) kompensiert werden. Sofern zwei Rückhaltekräfte 25, 25' sowie 25", 25‴ während des Umwickelns mit dem elektrischen Leiter 3 auf die Spuleneinrichtung 1 einwirken, kann zumindest eine erste Rückhaltekraft 25", 25‴ ein Komprimieren des Eisenkerns 2 bzw. des Blechpakets und zumindest eine zweite Rückhaltekraft 25, 25' ein Komprimieren des Vorspannmittels 7, 7' ausführen. Durch die zumindest teilweise getrennte Krafteinwirkung auf den Eisenkern 2 und das Vorspannmittel 7, 7' kann ein definiertes Umwickeln des Eisenkerns 2 ausgeführt werden, während dieser sich in einem definierten Zustand befindet.

In einer optionalen Ausführungsform kann das Vorspannmittel 7 während des Herstellungsverfahrens des Aufnahmekörpers 5, z. B. während eines Kunststoffspritzgussverfahrens, mit erzeugt oder mit eingebunden werden, sodass nach dem Herstellungsverfahren des Aufnahmekörpers 5 das Vorspannmittel 7 bereits an, insbesondere in oder auf, dem Aufnahmekörper 5 angeordnet bzw. befestigt ist. Alternativ kann das Vorspannmittel 7 an den Aufnahmekörper 5 gefügt werden, z. B. in einen Hohlraum des Aufnahmekörpers 5 eingesetzt werden, wobei im eingesetzten Zustand das Vorspannmittel 7 vorgespannt ist. Dieser mit dem vorgespannten Vorspannmittel 7 versehene Aufnahmekörper 5 wird an den Eisenkern 2 angesetzt, insbesondere befestigt. Nach dem Umwickeln des Eisenkerns 2 und des Aufnahmekörpers 5 kann ein Aktivierungsabschnitt des Aufnahmekörpers 5 von einem Grundkörper des Aufnahmekörpers 5 bewegt, insbesondere verbogen und/oder herausgetrennt werden, wobei durch das Bewegen des Aktivierungsabschnitts des Aufnahmekörpers 5 das Vorspannmittel 7 derart relativ zu dem Eisenkern 2 und dem elektrischen Leiter 3 bewegt und/oder freigelegt wird, dass eine vorspannmittelseitige Vorspannkraft 8 zwischen dem Eisenkern 2 und dem elektrischen Leiter 3 wirkt bzw. aktiviert wird, derart dass eine Alterung bzw. Längung des Eisenkerns 2 und/oder des Aufnahmekörpers 5 und/oder des elektrischen Leiters 3 durch die Vorspannkraft 8 bzw. eine Bewegung des Vorspannmittels 7 kompensierbar ist bzw. spielfrei gestellt werden kann. Mit anderen Worten kann durch Bewegen und/oder Entfernen eines aufnahmekörperseitigen oder an dem Aufnahmekörper 5 befestigten Aktivierungsmittels bzw. Aktivierungsabschnitts die Federfunktion des Vorspannmittels 7 freigegeben werden. Beispielsweise ist der Aktivierungsabschnitt zu dem Grundkörper über eine Sollbruch- und/oder Sollbiegestelle (nicht dargestellt) verbunden.

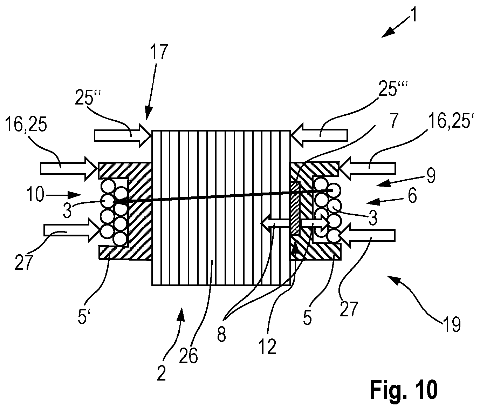

Wie beispielsweise in Figur 10 gezeigt, kann der Eisenkern 2, z. B. das Blechpaket, vermittels der Rückstellkräfte 25", 25‴ vor dem Wickelprozess eine Vorspannung erfahren. Diese Vorspannung ist vorzugsweise derart ausgelegt, dass die eigene Federkennlinie des als Blechpaket ausgebildeten Eisenkerns 2 kompensiert wird. Beispielsweise kann ein Kraftniveau im Bereich von beispielsweise 2 bis 10 kN, bevorzugt 3 bis 8 kN, besonders bevorzugt 4 bis 5 kN, vorliegen.

Die Vorspannung eines als Blechpaket ausgebildeten Eisenkerns 2 vermittels der Rückstellkräfte 25", 25‴ ist optional, beispielsweise kann diese im Fall eines geklebten Blechpakets, also einem Blechpaket, bei dem die einzelnen Lamellen miteinander verklebt sind, entfallen.

Der zur Bildung der Wicklung 4 verwendete elektrische Leiter 3 kann beispielsweise einen Wickelzug bzw. eine Zugkraft während des Wickelprozesses im Bereich 10 bis 400 N, bevorzugt 20 bis 200 N, weiter bevorzugt 30 bis 150 N, höchst bevorzugt 40 bis 100 N, aufweisen. Diese kann eine weiteren Rückstellkraft 27 bilden, vgl. Figur 10. Als Option ist es möglich, dass vermittels der weiteren Rückstellkraft 27 auf die rückhaltemittelseitige und auf die Aufnahmekörper 5 einwirkende Rückstellkraft 25, 25' verzichtet werden kann. Die angegebenen Werte für den Wickelzug bzw. die Zugkräfte können für einen elektrischen Leiter 3 aus Kupfer, z. B. einen Kupferdraht, mit einem Durchmesser von 0,25 bis 6 mm, bevorzugt 0,5 bis 4,0 mm, besonders bevorzugt 1,0 bis 2,0 mm, gelten. Der Wickelzug bzw. die Zugkraft bilden eine weitere Rückstellkraft 27. Nach einem Entspannen des Eisenkerns bzw. des Federpakets kann sich eine resultierende Vorspannkraft 8 ausbilden, die beispielsweise im Bereich von 1500 N bis 4500 N, bevorzugt 2000 N bis 4000 N, besonders bevorzugt 2500 N bis 3500 N, liegt. Die resultierende Vorspannkraft 8 kann sich resultierend aus einer Kraft durch das nach außen drängen der Lamellen des Blechpakets und der weiteren Rückstellkraft 27 aus dem Wickelzug bzw. der Zugkraft ausbilden. Mit anderen Worten bildet sich eine Kraftbalance mit einer dauerhaften Vorspannung aus, die auch dann zumindest zu einem Mindestmaß noch vorliegt, wenn sich aufgrund von Alterungseffekten eine Reduktion des Werts der Vorspannkraft ergibt.

### BEZUGSZEICHENLISTE

- 1: Spuleneinrichtung
- 2: Eisenkern
- 3: elektrischer Leiter
- 4: Wicklung
- 5, 5': Aufnahmekörper
- 6: Aufnahmeausnehmung von 5, 5'
- 7, 7': Vorspannmittel
- 8: Vorspannkraft
- 9: erste Stirnseite von 2
- 10: zweite Stirnseite von 2
- 11: Längsachse von 2
- 12, 12': Aufnahmeraum von 5, 5'
- 13: Zentrier- und/oder Führungsabschnitt von 5 und/oder 2
- 14: erstes Vorspannelement von 7
- 15: zweites Vorspannelement von 7
- 16: Rückhaltemittel
- 17: Rückhaltestellung
- 18: Hervorhebung
- 19: Zuführkanal von 5, 5'
- 20: Gegenschaltseite
- 21: Schaltseite
- 22: Anschluss
- 23: Sensor
- 24: Aufnahme von 5, 5'
- 25, 25', 25", 25‴: Rückhaltekraft
- 26: Blechlamelle
- 27: weitere Rückstellkraft
- 28: erster Begrenzungsabschnitt von 5
- 29: zweiter Begrenzungsabschnitt von 5

## Patentansprüche

1. Spuleneinrichtung (1) für eine elektrische Maschine (100) oder einen elektrischen Wandler, umfassend einen Eisenkern (2), insbesondere ein Lamellenpaket, um den ein elektrischer Leiter (3) zur Ausbildung einer Wicklung (4) gewickelt ist, wobei zwischen dem Eisenkern (2) und dem elektrischen Leiter (3) zumindest abschnittsweise ein Aufnahmekörper (5) angeordnet ist, der eine Aufnahmeausnehmung (6) zur zumindest abschnittsweisen Aufnahme des elektrischen Leiters (3) aufweist, **gekennzeichnet durch** wenigstens ein Vorspannmittel (7) das zwischen dem elektrischen Leiter (3) und dem Eisenkern (2) angeordnet oder ausgebildet ist und im Endmontagezustand der Spuleneinrichtung (1) eine Vorspannkraft (8) zwischen dem Eisenkern (2) und dem elektrischen Leiter (3) ausbildet.

2. Spuleneinrichtung (1) nach Anspruch 1, **dadurch gekennzeichnet, dass** der Eisenkern (2) eine längliche, insbesondere quaderförmige, Form aufweist und wenigstens ein Vorspannmittel (7) an zumindest einer Seite (9, 10), bevorzugt einer Stirnseite (9, 10), des Eisenkerns (2) angeordnet ist.

3. Spuleneinrichtung (1) nach Anspruch 1 oder 2, **dadurch gekennzeichnet, dass** die Vorspannkraft (8) des wenigstens einen Vorspannmittels (7) in eine im Wesentlichen parallel zur Längsachse (11) des Eisenkerns (2) verlaufende Richtung gerichtet ist.

4. Spuleneinrichtung (1) nach einem der vorhergehenden Ansprüche, **dadurch gekennzeichnet, dass** der Aufnahmekörper (5) zumindest einen Aufnahmeraum (12) zur zumindest abschnittsweisen, bevorzugt überwiegenden, besonders bevorzugt vollständigen, Aufnahme wenigstens eines Vorspannmittels (7) aufweist.

5. Spuleneinrichtung (1) nach einem der vorhergehenden Ansprüche, **dadurch gekennzeichnet, dass** der Aufnahmekörper (5) und/oder der Eisenkern (2) einen Zentrier- und/oder Führungsabschnitt (13) aufweist, der bei Einsetzen des Vorspannmittels (7) in den Aufnahmeraum (12) zentrierend und/oder führend wirkt.

6. Spuleneinrichtung (1) nach einem der vorhergehenden Ansprüche, **dadurch gekennzeichnet, dass** die Wicklung (4) im Zuge eines mehrmaliges Umwickelns des elektrischen Leiters (3) um den Eisenkern (2) und den wenigstens einen Aufnahmekörper (5) zur Bildung einer elektrischen Spule gebildet wurde.

7. Spuleneinrichtung (1) nach einem der vorhergehenden Ansprüche, **dadurch gekennzeichnet, dass** eine Druckkraft zwischen der Wicklung (4) und dem Eisenkern (2) wirkt, die durch eine auf den elektrischen Leiter (3) wirkende Zugkraft während des mehrmaligen Umwickelns des elektrischen Leiters (3) um den Eisenkern (2) erzeugt wurde bzw. erzeugbar ist.

8. Spuleneinrichtung (1) nach einem der vorhergehenden Ansprüche, **dadurch gekennzeichnet, dass** das Vorspannmittel (7) aus wenigstens zwei Vorspannelementen (14, 15) besteht, bevorzugt sind wenigstens zwei Vorspannelemente (14, 15) als Stapel in die Aufnahmeausnehmung (6) eingesetzt.

9. Spuleneinrichtung (1) nach einem der vorhergehenden Ansprüche, **dadurch gekennzeichnet, dass** zumindest ein Vorspannmittel (7) wenigstens eine Tellerfeder umfasst, bevorzugt umfasst das zumindest eine Vorspannmittel (7) wenigstens zwei Tellerfedern.

10. Elektrische Maschine (100) gebildet aus wenigstens zwei Spuleneinrichtungen (1), wobei die Spuleneinrichtungen (1) nach einem der vorhergehenden Ansprüche ausgebildet sind und die Spuleneinrichtungen (1) im zusammengesetzten Zustand einen ringförmigen Stator ausbilden.

11. Elektrischer Wandler umfassend wenigstens eine Spuleneinrichtung (1), wobei die Spuleneinrichtung nach einem Ansprüche 1 bis 11 ausgebildet ist.

12. Verfahren zum Herstellen einer Spuleneinrichtung (1), insbesondere einer Spuleneinrichtung (1) nach einem der Ansprüche 1 bis 9, umfassend die Verfahrensschritte:
- Bereitstellen eines Eisenkerns (2), insbesondere eines Lamellenpakets, sowie eines Aufnahmekörpers (5), wobei der Aufnahmekörper (5) eine Aufnahmeausnehmung (6) zur zumindest abschnittsweisen Aufnahme eines elektrischen Leiters (3) aufweist,
- Anordnen wenigstens eines Vorspannmittels (7) an den Eisenkern (2) und/oder den Aufnahmekörper (5),
- Umwickeln des Eisenkerns (2) und Aufnahmekörpers (5) mit einem elektrischen Leiter (3), wobei
- das wenigstens eine Vorspannmittel (7) derart zwischen dem Eisenkern (2) und dem elektrischen Leiter (3) angeordnet oder ausgebildet ist, dass im Endmontagezustand der Spuleneinrichtung (1) eine Vorspannkraft (8) zwischen dem Eisenkern (2) und dem elektrischen Leiter (3) wirkt.

13. Verfahren nach Anspruch 12, **dadurch gekennzeichnet, dass** das wenigstens eine Vorspannmittel (7) nach dem Umwickeln des Eisenkerns (2) und des Aufnahmekörpers (5) angeordnet wird.

14. Verfahren nach Anspruch 12, **dadurch gekennzeichnet, dass** das wenigstens eine Vorspannmittel (7) vor oder während dem Umwickeln des Eisenkerns (2) und des Aufnahmekörpers (5) angeordnet wird.

15. Verfahren nach Anspruch 12 oder 14, **dadurch gekennzeichnet, dass** das wenigstens eine Vorspannmittel (7) während des Umwickelns des Eisenkerns (2) und des Aufnahmekörpers (5) durch ein Rückhaltemittel (16) in eine Rückhaltestellung (17) zurückgehalten wird.
